# EUROPÄISCHE PATENTSCHRIFT

(11) **EP 3 787 389 B1**
(45) Veröffentlichungstag und Bekanntmachung des Hinweises auf die Patenterteilung: **21.02.2024**
(21) Anmeldenummer: 19723722.5
(22) Anmeldetag: 02.05.2019
(51) Int. Cl.: A01D 34/86, A01B 59/06, B62D 49/06

(54) **GERÄTETRÄGERVORRICHTUNG FÜR EIN FAHRZEUG UND FAHRZEUG**
EQUIPMENT SUPPORT APPARATUS FOR A VEHICLE, AND VEHICLE
DISPOSITIF PORTE-ÉQUIPEMENT POUR UN VÉHICULE ET VÉHICULE

(30) Priorität: 04.05.2018 DE 102018110701
(43) Veröffentlichungstag der Anmeldung: 10.03.2021
(73) Patentinhaber: Alfred Kärcher SE & Co. KG, 71364 Winnenden (DE)
(72) Erfinder: KRAL, Andreas, 73630 Remshalden (DE); RÖHRLE, Philipp, 67593 Westhofen (DE)
(74) Vertreter: Hoeger, Stellrecht & Partner Patentanwälte mbB
(86) Internationale Anmeldenummer: PCT/EP2019/061291
(87) Internationale Veröffentlichungsnummer: WO 2019/211397

(56) Entgegenhaltungen:
- EP-A1- 2 949 198
- DE-A1-102005 035 634
- DE-A1-102016 102 894
- DE-U1- 29 716 916
- DE-U1- 29 919 432
- FR-A1- 2 915 655

## Beschreibung

Die Erfindung betrifft eine Geräteträgervorrichtung für ein Fahrzeug, umfassend eine Lineareinheit mit einem Halter und einem Schlitten, wobei der Schlitten an dem Halter linear verfahrbar gehalten ist, eine Auslegereinrichtung mit einem Werkzeughalter, wobei die Auslegereinrichtung über ein Schlittengelenk um eine Schlitten-Schwenkachse schwenkbar an dem Schlitten gehalten ist, und eine Festlegungseinrichtung zur Festlegung einer Schwenkposition der Auslegereinrichtung relativ zu dem Schlitten bezüglich der Schlitten-Schwenkachse.

Die Erfindung betrifft ferner ein Fahrzeug und insbesondere Kommunalfahrzeug.

Die DE 10 2013 220 147 A1 offenbart eine Bodenreinigungsmaschine mit einem rotierend angetriebenen Seitenbesen, der an einem Arm gehaltert ist, der schwenkbar um eine vertikale Achse mit einer am Fahrzeugrahmen angebrachten Halterung verbunden ist.

Die US 2,996,742 offenbart einen Seitenbesen.

Die EP 1 967 653 A1 offenbart eine Kehrmaschine mit mindestens einem drehend angetriebenen Kehrbesen, der am vorderen Ende einer Auslegeranordnung vorgesehen ist.

Die DE 295 09 819 U1 offenbart eine Anbauvorrichtung für ein Straßenreinigungsfahrzeug zur Halterung eines Frontanbaugeräts.

Aus der DE 10 2016 102 894 A1 ist ein Frontgeräteträger mit einem ausfahrbaren Ausleger für Anbaugeräte zum Anbau an ein Trägerfahrzeug mit einer Anbauplatte, einem an der Anbauplatte befestigten Tragrahmen, wobei am Tragrahmen ein verfahrbarer Tragschlitten angeordnet ist und am Ausleger mindestens ein Hydraulikzylinder angeordnet ist, bekannt. Am, im oder auf dem Tragschlitten ist ein Schwenkmotor angeordnet, am Tragschlitten ist ein ausfahrbarer Ausleger mit innenliegendem, doppelt wirkendem Scheibenkolbenzylinder gelagert, auf dem Ausleger ist ein Geräteschwenkzylinder angeordnet, der Schwenkmotor treibt als Direktantrieb den Ausleger, wobei am Ausleger ein universelles Schnellwechselsystem angeordnet ist, und an dem ein Anbaugerät angekoppelt und geführt ist.

Aus der DE 10 2010 017 608 A1 ist ein Geräteträger und Ausleger für Reinigungsgeräte zum Anbau an ein Trägerfahrzeug bekannt.

Der Erfindung liegt die Aufgabe zugrunde, eine Geräteträgervorrichtung der eingangs genannten Art bereitzustellen, mit der sich umfangreiche Bearbeitungsmöglichkeiten ergeben.

Diese Aufgabe wird bei der eingangs genannten Geräteträgervorrichtung erfindungsgemäß dadurch gelöst, dass die Festlegungseinrichtung eine Formschlusseinrichtung zur Festlegung der Auslegereinrichtung durch Formschluss mit dem Schlitten aufweist, und dass die Festlegungseinrichtung eine Antriebseinrichtung zur Festlegung der Auslegereinrichtung relativ zu dem Schlitten bezüglich der Schlitten-Schwenkachse umfasst, wobei die Antriebseinrichtung mindestens eines der Folgenden umfasst:
(i) einen Antrieb für ein Werkzeug, welches an dem Werkzeughalter gehalten ist;
(ii) einen Antrieb zur Einstellung einer Schwenkposition der Auslegereinrichtung bezüglich der Schlitten-Schwenkachse.

Bei einem Bearbeitungsvorgang mittels der Geräteträgervorrichtung, welche an einem Fahrzeug fixiert ist, werden über ein entsprechendes Werkzeug, welches an dem Werkzeughalter an der Auslegereinrichtung gehalten ist, Kräfte auf den Bearbeitungsbereich ausgeübt. Entsprechende Gegenkräfte wirken auf die Geräteträgervorrichtung. Diese Gegenkräfte müssen abgeleitet bzw. aufgefangen werden.

Die Festlegungseinrichtung umfasst die Formschlusseinrichtung und die Antriebseinrichtung.

Dadurch ist es möglich, insbesondere wenn relativ große Gegenkräfte wirken, eine Schwenkposition bezüglich der Schlitten-Schwenkachse durch Formschluss herzustellen. Dadurch können insbesondere Bearbeitungsvorgänge wie beispielsweise Wildkrautentfernung über einen Wildkrautbesen durchgeführt werden, bei dem große Kräfte notwendig sind (und dadurch auch entsprechend große Gegenkräfte entstehen). Diese können durch die Formschlusseinrichtung aufgefangen werden.

Bei einer alternativen Betriebsweise wirkt eine vorhandene Antriebseinrichtung und insbesondere ein Antrieb für ein Werkzeug zur Festlegung einer Schwenkposition.

Beispielsweise kann durch Vorgabe einer Rotationsrichtung eines auf einen Bearbeitungsbereich wirkenden Werkzeugs eine Schwenkstellung und insbesondere maximale Schwenkstellung festgelegt werden. Bei entsprechender Rotationsrichtung lässt sich die Auslegereinrichtung gegen einen Anlagebereich drücken, wobei die entsprechende Kraft durch das Werkzeug in Kontakt mit einer Bearbeitungsfläche (insbesondere einer Bodenfläche) mit geeigneter Rotationsrichtung resultiert.

Durch unterschiedliche Rotationsrichtungen lassen sich dadurch mindestens zwei ausgezeichnete Stellungen einstellen.

Auch über einen Antrieb zur Einstellung einer Schwenkposition (wie einen Schwenkmotor oder einen Zylinder) lässt sich eine vorgegebene Schwenkstellung einstellen. Dies ist geeignet, wenn nicht zu hohe Kräfte vorhanden sind, da entsprechende Gegenkräfte auf den Antrieb wirken und dort aufgefangen werden müssen.

Erfindungsgemäß lässt sich die Geräteträgervorrichtung und damit das Fahrzeug mit unterschiedlichen Werkzeugen verwenden, wobei sowohl Werkzeuge mit relativ geringer Kraftbeaufschlagung, wie Kehrbesen, als auch Werkzeuge mit relativ großer Kraftbeaufschlagung, wie beispielsweise Wildkrautbesen, alternativ verwendet werden können, und zwar an der gleichen Geräteträgervorrichtung verwendet werden können.

Durch die Auslegereinrichtung ergibt sich ein großer Bearbeitungsbereich mit erweiterten Einstellmöglichkeiten.

Durch die Lineareinheit lässt sich die Schlittenposition insbesondere längs einer Fahrzeugbreite einstellen und festlegen.

Günstig ist es, wenn die Schlitten-Schwenkachse quer und insbesondere senkrecht zu einer Verschiebungsachse des Schlittens an der Lineareinheit orientiert ist. Dadurch ergibt sich ein großer Einsatzbereich für ein an dem Werkzeughalter gehaltenes Werkzeug.

Günstig ist es, wenn das Schlittengelenk ein Gelenkteil umfasst, welches zu dem Schlitten beweglich ist, und dass durch die Formschlusseinrichtung das bewegliche Gelenkteil durch Formschluss an dem Schlitten festlegbar ist. Durch eine entsprechende Formschlussverbindung lässt sich das Schlittengelenk "sperren". Das bewegliche Gelenkteil wird mit einem unbeweglichen Gelenkteil am Schlitten formschlüssig verbunden. Es können dadurch relativ große Kräfte aufgenommen werden und abgeleitet werden. Dadurch wiederum sind Bearbeitungsvorgänge mit relativ hoher Kraftbeaufschlagung möglich.

Bei einer konstruktiv einfachen Ausführungsform weist das bewegliche Gelenkteil mindestens eine Öffnung auf und der Schlitten weist mindestens eine Gegenöffnung auf, wobei durch ein Stiftelement, welches in die mindestens eine Öffnung und die mindestens eine Gegenöffnung eingetaucht ist, ein Formschluss hergestellt ist. Dadurch lässt sich auf einfache Weise das bewegliche Gelenkteil des Schlittengelenks an dem Schlitten festlegen. Durch eine Mehrzahl von Öffnungen, welche entsprechend angeordnet sind, lassen sich unterschiedliche Schwenkstellungen festlegen. Eine Festlegung lässt sich dabei auf einfache Weise durch Positionierung des Stiftelements erreichen; ebenfalls lässt sich eine festgelegte Stellung auf einfache Weise durch Herausnahme des Stiftelements lösen. Insbesondere lässt sich dadurch auf einfache Weise eine Schwenkposition bezüglich der Schlitten-Schwenkachse manuell festlegen bzw. manuell aufheben.

Insbesondere ist das Stiftelement als Absteckbolzen ausgebildet mit einem Kopfteil als Anlageelement. Dadurch kann das Stiftelement von oben in die entsprechenden Öffnungen, welche fluchtend ausgerichtet sind, eingesteckt werden und es ist eine Formschlussverbindung zur Sperrung einer Schwenkbeweglichkeit hergestellt.

Konstruktiv günstig ist es, wenn das bewegliche Gelenkteil eine Mehrzahl von beabstandeten Öffnungen aufweist und insbesondere mindestens drei Öffnungen aufweist. Die Anzahl der Öffnungen bestimmt die Anzahl der unterschiedlichen Schwenkstellungen, die durch Formschluss festlegbar sind. Grundsätzlich ist es möglich, dass auch der Schlitten eine Mehrzahl von Gegenöffnungen aufweist. Beispielsweise weist das bewegliche Gelenkelement eine Mehrzahl von Öffnungen auf und der Schlitten weist nur eine Gegenöffnung auf, oder der Schlitten weist eine Mehrzahl von Gegenöffnungen auf und das bewegliche Gelenkelement weist nur eine Öffnung auf, oder das Gegenelement weist eine Mehrzahl von Öffnungen auf und der Schlitten weist eine Mehrzahl von Gegenöffnungen auf. Je mehr Öffnungen bzw. Gegenöffnungen vorhanden sind, desto mehr unterschiedliche Schwenkstellungen lassen sich durch Formschluss festlegen.

Insbesondere sind Öffnung-Gegenöffnung-Paare für folgende Stellungen vorgesehen:
- eine ausgezeichnete und insbesondere maximale Schwenkstellung nach rechts;
- eine ausgezeichnete und insbesondere maximale Schwenkstellung nach links;
- mindestens eine Schwenkstellung zwischen diesen ausgezeichneten Schwenkstellungen.

Es ist ferner günstig, wenn eine Öffnungsrichtung einer Öffnung und Gegenöffnung mindestens näherungsweise parallel zu einer Schlitten-Schwenksachse des Schlittengelenks orientiert ist. Dadurch lässt sich auf einfache Weise über ein Stiftelement und insbesondere einen Absteckbolzen ein Formschluss herstellen bzw. aufheben. Ferner ergibt sich eine gute Zugänglichkeit.

Bei einer Ausführungsform ist zwischen dem Schlitten und dem beweglichen Gelenkteil eine Kopplungseinrichtung angeordnet. Diese koppelt mechanisch das bewegliche Gelenkteil mit dem Schlitten. Dies kann beispielsweise vorteilhaft sein, wenn für eine kurze Fahrt keine Formschlussfestlegung zwischen dem Schlitten und dem beweglichen Gelenkteil durchgeführt wird. Es wird dadurch eine Verschwenkung erschwert und insbesondere eine schwerkraftgetriebene Verschwenkung wird erschwert. Die Kopplungseinrichtung ist beispielsweise eine Federeinrichtung, wie eine mechanische Feder oder Gasdruckfeder, oder ein Hydraulikzylinder.

Günstig ist es, wenn mindestens ein Pufferelement vorgesehen ist, welches eine ausgezeichnete Schwenkstellung und insbesondere maximale Schwenkstellung der Auslegereinrichtung bezüglich der Schlitten-Schwenkachse vorgibt. Es ist dadurch ein Anlageelement bereitgestellt, welches eine Weiterverschwenkung sperrt. Es lässt sich so insbesondere eine erste maximale Schwenkstellung nach rechts und eine zweite maximale Schwenkstellung nach links (bezogen auf eine Vorwärts-Fahrtrichtung eines Fahrzeugs mit der Geräteträgervorrichtung) definieren. Durch das Vorsehen eines Pufferelements lässt sich insbesondere auch über die Antriebseinrichtung eine Schwenkstellung festlegen, bei welcher aktiv die Auslegereinrichtung gegen das Pufferelement gedrückt wird bzw. das Pufferelement gegen einen Anlagebereich gedrückt wird. Dieses aktive Drücken kann beispielsweise durch eine Werkzeugrotation eines Werkzeugs an einer Beaufschlagungsfläche in einer bestimmten Richtung verursacht sein.

Es kann dabei vorgesehen sein, dass das mindestens eine Pufferelement an dem Schlitten angeordnet ist und ein bewegliches Gelenkteil des Schlittengelenks an dem Pufferelement anlegbar ist und/oder dass das mindestens eine Pufferelement an dem beweglichen Gelenkteil angeordnet ist und an dem Schlitten anlegbar ist.

Bei einer Ausführungsform ist an dem Werkzeughalter ein Antrieb für ein Werkzeug angeordnet, wobei der Antrieb insbesondere ein Rotationsantrieb ist. Es lässt sich so beispielsweise ein Besenwerkzeug bzw. Bürstenwerkzeug rotierend betreiben.

Es ist vorgesehen, dass über eine Rotationsrichtung eines Werkzeugs eine Schwenkposition der Auslegereinrichtung bezüglich der Schlitten-Schwenkachse festlegbar ist und insbesondere auch einstellbar ist. Durch eine geeignete Rotationsrichtung lässt sich insbesondere eine maximale Schwenkstellung einstellen, bei der aufgrund der Rotation des Werkzeugs ausgeübte Kräfte die Auslegereinrichtung in die maximale Schwenkstellung drücken und dadurch diese auch festlegen.

Aus dem gleichen Grund ist es günstig, wenn über eine erste Rotationsrichtung eine erste maximale Schwenkposition bezüglich der Schlitten-Schwenkachse festlegbar ist und über eine zweite Rotationsrichtung, welche der ersten Rotationsrichtung entgegengerichtet ist, eine zweite maximale Schwenkposition bezüglich der Schlitten-Schwenkachse festlegbar ist. Es lässt sich so gewissermaßen "softwaremäßig", nämlich über Einstellung der Rotationsrichtung des entsprechenden Werkzeugs eine Schwenkstellung und insbesondere maximale Schwenkstellung über die Antriebseinrichtung festlegen, insbesondere wenn nicht zu große Kräfte ausgeübt werden. Es kann vorgesehen sein, dass die maximalen Schwenkstellungen auch durch die Formschlusseinrichtung festlegbar sind.

Günstig ist es, wenn ein Satz von Werkzeugen mit mindestens einem ersten Werkzeug und einem zweiten Werkzeug, welche unterschiedlich sind, vorgesehen ist, wobei bei einem Bearbeitungsvorgang mittels des ersten Werkzeugs eine kleinere Kraft auf die Geräteträgervorrichtung ausgeübt ist als bei einer Bearbeitung mit dem zweiten Werkzeug, wobei eine Festlegung einer Schwenkposition bezüglich der Schlitten-Schwenkachse für das erste Werkzeug mittels der Antriebseinrichtung und für das zweite Werkzeug mittels der Formschlusseinrichtung erfolgt. Es lässt sich so angepasst an den Bearbeitungsvorgang (und damit an das Werkzeug) eine geeignete Festlegung durchführen. Wenn relativ große Kräfte wirken, dann genügt eine Festlegung über die Antriebseinrichtung nicht und ein Bediener wählt eine Festlegung über die Formschlusseinrichtung. Bei relativ kleinen Kräften kann eine Festlegung über die Antriebseinrichtung erfolgen.

Insbesondere umfasst der Werkzeugsatz Reinigungswerkzeuge und vorzugsweise Borstenwerkzeuge bzw. Bürstenwerkzeuge mit unterschiedlicher Borstenhärte. Üblicherweise sind die Kräfte, welche bei einem Bearbeitungsvorgang auf die Geräteträgervorrichtung wirken, größer, wenn die Borstenhärte größer ist.

Beispielsweise ist das erste Werkzeug ein (konventioneller) Kehrbesen. Wenn dadurch übliche Flächen wie gepflasterte oder asphaltierte Flächen gekehrt werden, sind die wirkenden Kräfte relativ gering.

Es kann günstig sein, wenn das zweite Werkzeug ein Wildkrautbesen ist. Es ergeben sich dadurch erweiterte Einsatzmöglichkeiten. Für einen Wildkrautbesen werden in der Regel relativ harte Borsten verwendet, und es wirken große Kräfte. Es ist dann günstig, wenn eine Festlegung über die Formschlusseinrichtung erfolgt, um die entsprechenden hohen Kräfte abfangen zu können.

Insbesondere umfasst die Geräteträgervorrichtung mindestens einen Seitenbesen und insbesondere einen ersten Seitenbesen und einen zweiten Seitenbesen, welche an einem Rahmen angeordnet sind, an welchem die Lineareinheit sitzt. Es lässt sich so insbesondere eine Drei-Werkzeug-Geräteträgervorrichtung bereitstellen.

Es ergeben sich erweiterte Einsatzmöglichkeiten und Bedienmöglichkeiten, wenn die Auslegereinrichtung um eine Neigungsachse relativ zu dem Schlitten schwenkbar ist, welche quer zu einer Schlitten-Schwenkachse des Schlittengelenks orientiert ist. Über eine entsprechende Neigung lässt sich eine Höhenposition des Werkzeugs relativ zu der Lineareinheit und damit auch zu einem Fahrzeug einstellen. Es kann dadurch insbesondere für eine Freifahrt das Werkzeug abgehoben werden und für einen Bearbeitungsvorgang das Werkzeug auf die zu bearbeitende Fläche aufgesetzt werden. Ferner lässt sich dadurch auch ein Anpressdruck des Werkzeugs an eine Bearbeitungsfläche einstellen.

Bei einer konstruktiv einfachen Ausführungsform umfasst die Auslegereinrichtung einen Parallelogramm-Lenker. Es lässt sich dadurch auf einfache Weise eine Neigungseinstellung durchführen.

Bei einer Ausführungsform ist der Werkzeughalter über eine Gelenkeinrichtung mit mindestens einer Werkzeughalter-Schwenkachse schwenkbar an dem Ausleger (insbesondere einem Parallelogramm-Lenker) der Auslegereinrichtung gehalten. Es lässt sich dadurch für einen Bearbeitungsvorgang die Position des Werkzeughalters und damit des Werkzeugs bezüglich einer Bearbeitungsfläche optimiert einstellen.

Insbesondere ist dabei die mindestens eine Werkzeughalter-Schwenkachse quer zu einer Schlitten-Schwenkachse orientiert. Es ergeben sich dadurch erweiterte Bearbeitungsmöglichkeiten.

Vorteilhaft ist es, wenn die Gelenkeinrichtung eine Rollachse und/oder eine Nickachse als Werkzeughalter-Schwenkachse aufweist. Es lassen sich so unterschiedliche Positionen eines Werkzeugs zu einer zu bearbeitenden Fläche einstellen. Es lässt sich die für einen speziellen Bearbeitungsvorgang optimierte Positionierung des Werkzeugs einstellen.

Insbesondere ist die Geräteträgervorrichtung als Front-Geräteträgervorrichtung ausgebildet, wobei dann insbesondere die Lineareinheit vor einer Fahrzeugfront positioniert ist.

Erfindungsgemäß wird ein Fahrzeug bereitgestellt, an welchem eine erfindungsgemäße Geräteträgervorrichtung fest oder lösbar positioniert ist.

Das erfindungsgemäße Fahrzeug weist die bereits im Zusammenhang mit der erfindungsgemäßen Geräteträgervorrichtung erläuterten Vorteile auf.

Insbesondere ist die Lineareinheit an einer Vorderfront des Fahrzeugs positioniert und insbesondere mit der Vorderfront verbunden oder zu dieser beabstandet. Dadurch kann ein Bediener des Fahrzeugs mit der Auslegereinrichtung und daran gehaltenem Werkzeug einen Bearbeitungsvorgang im Sichtfeld des Bedieners durchführen.

Insbesondere sind mindestens folgende festlegbare Stellungen der Auslegereinrichtung bezüglich des Schlittens vorgesehen:
eine erste maximale Schwenkstellung nach rechts bezogen auf eine Vorwärts-Fahrtrichtung des Fahrzeugs;
eine zweite maximale Schwenkstellung nach links bezogen auf die Vorwärts-Fahrtrichtung des Fahrzeugs;
eine Frontstellung, bei der die Auslegereinrichtung zwischen der ersten maximalen Schwenkstellung und der zweiten maximalen Schwenkstellung positioniert ist.

Es ergeben sich dann umfangreiche Bearbeitungsmöglichkeiten.

Es ist dann vorzugsweise vorgesehen, dass die Frontstellung durch die Formschlusseinrichtung festgelegt ist.

Je nach Anwendungsfall und verwendetem Werkzeug können dabei die maximalen Schwenkstellungen durch die Formschlusseinrichtung oder durch die Antriebseinrichtung festgelegt.

Die nachfolgende Beschreibung bevorzugter Ausführungsformen dient im Zusammenhang mit den Zeichnungen der näheren Erläuterung der Erfindung. Es zeigen:
- Figur 1: eine perspektivische Darstellung eines Ausführungsbeispiels eines erfindungsgemäßen Fahrzeugs mit einer angebauten Geräteträgervorrichtung mit einem ersten Werkzeug;
- Figur 2: die Geräteträgervorrichtung gemäß Figur 1, wenn sie nicht an dem Fahrzeug gehalten ist;

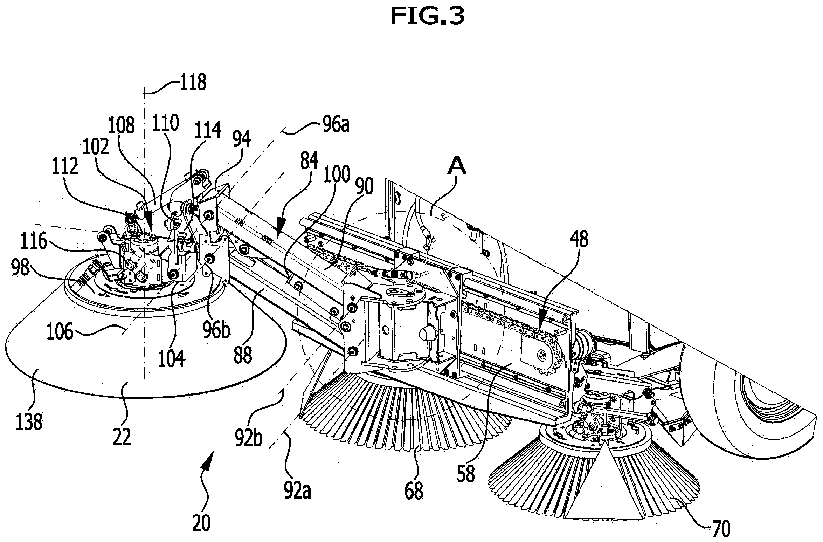

- Figur 3: eine Detailansicht aus Figur 1 mit der Geräteträgervorrichtung;
- Figur 4: eine Detailansicht des Bereichs A gemäß Figur 3;
- Figur 5(a): eine Draufsicht auf das Fahrzeug gemäß Figur 1 in der Richtung B (wobei nur ein Teil des Fahrzeugs gezeigt) mit unterschiedlichen Verschiebungsstellungen eines Schlittens;
- Figur 5(b): eine ähnliche Ansicht wie in Figur 5(a) mit unterschiedlichen Schwenkstellungen einer Auslegereinrichtung;
- Figur 6: die gleiche Ansicht wie Figur 1, wobei an der Geräteträgervorrichtung ein zweites Werkzeug, welches sich von dem ersten Werkzeug unterscheidet, gehalten ist;

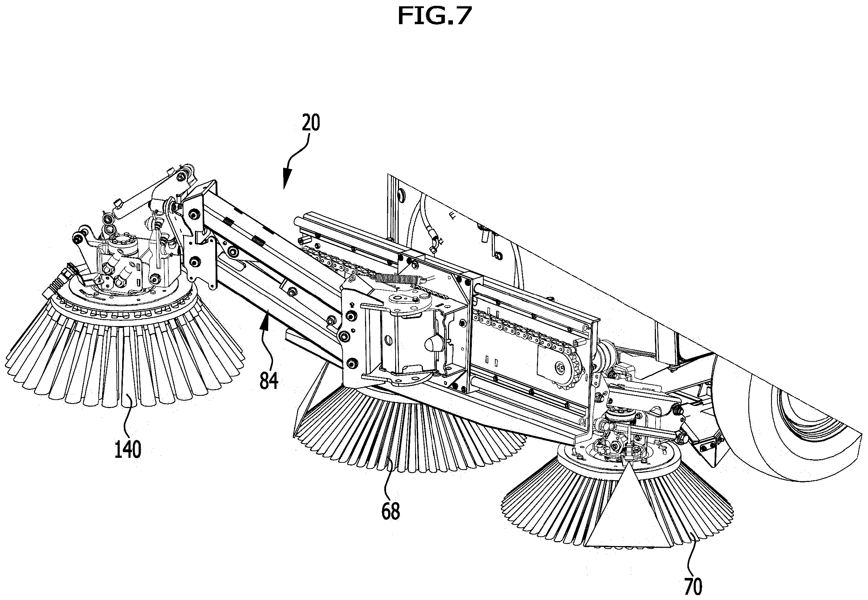

- Figur 7: eine ähnliche Ansicht wie Figur 3 mit gehaltenem zweiten Werkzeug;
- Figur 8(a): eine Draufsicht in der Richtung C gemäß Figur 6 (wobei nur ein Teil des Fahrzeugs gezeigt ist) mit unterschiedlichen Verschiebungsstellungen eines Schlittens;
- Figur 8(b): eine ähnliche Ansicht wie Figur 8(a) mit unterschiedlichen Schwenkstellungen einer Auslegereinrichtung; und
- Figur 9: eine ähnliche Ansicht wie Figur 8(a) mit im Vergleich zur Figur 8(a) unterschiedlicher Schwenkstellung der Auslegereinrichtung.

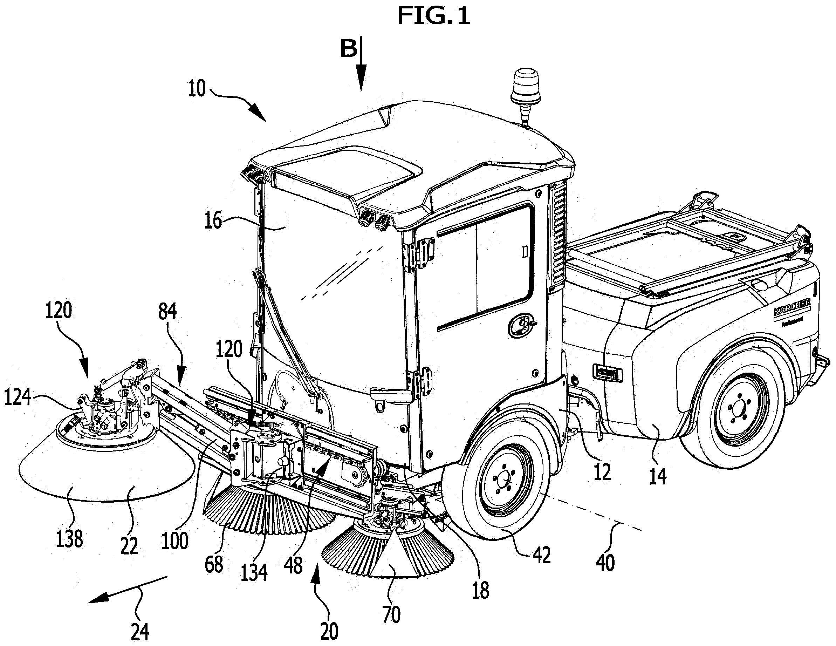

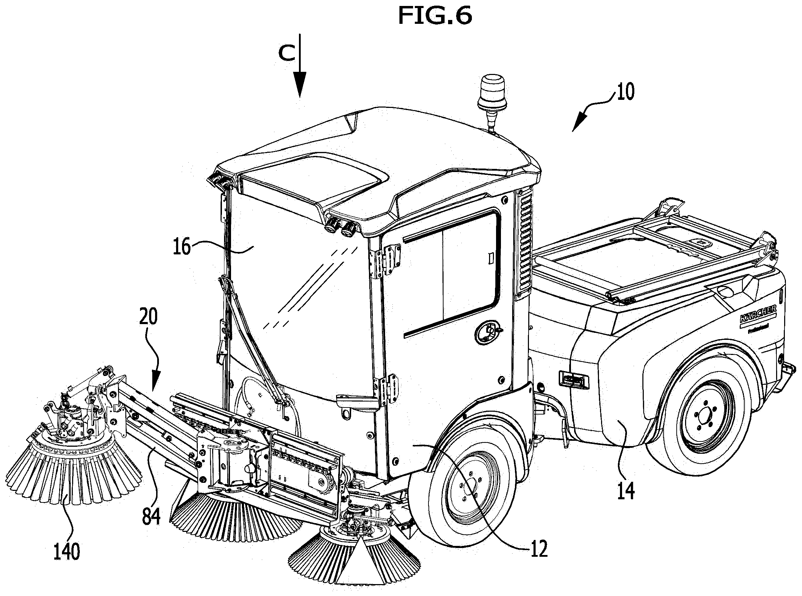

Ein Ausführungsbeispiel eines erfindungsgemäßen Fahrzeugs 10 (Figuren 1, 6) ist ein Kommunalfahrzeug. Das Fahrzeug 10 umfasst einen Vorderwagen 12 und einen Hinterwagen 14.

Bei einer Ausführungsform sind der Vorderwagen 12 und der Hinterwagen 14 über einen Knicklenker 15 verbunden.

An dem Vorderwagen sitzt eine Fahrerkabine 16.

Das Fahrzeug hat eine Vorderfront 18.

An dem Hinterwagen 14 können Aufbauten angeordnet sein wie beispielsweise ein Schmutzsammelbehälter (in den Zeichnungen nicht gezeigt).

An dem Fahrzeug 12 ist eine Geräteträgervorrichtung 20 positioniert. Die Geräteträgervorrichtung 20 ist insbesondere als Front-Geräteträgervorrichtung ausgebildet, bei der ein Werkzeug 22 zu einer Bearbeitung und insbesondere Bodenbearbeitung vor der Vorderfront 18 (bezogen auf eine Vorwärts-Fahrtrichtung 24) für einen Bearbeitungsvorgang gehalten ist.

Der Bearbeitungsvorgang ist insbesondere ein Bodenbearbeitungsvorgang, welcher über das Werkzeug 22 vor der Vorderfront 18 des Fahrzeugs 10 stattfindet.

Die Geräteträgervorrichtung 20 ist insbesondere abnehmbar an dem Fahrzeug 10 positioniert.

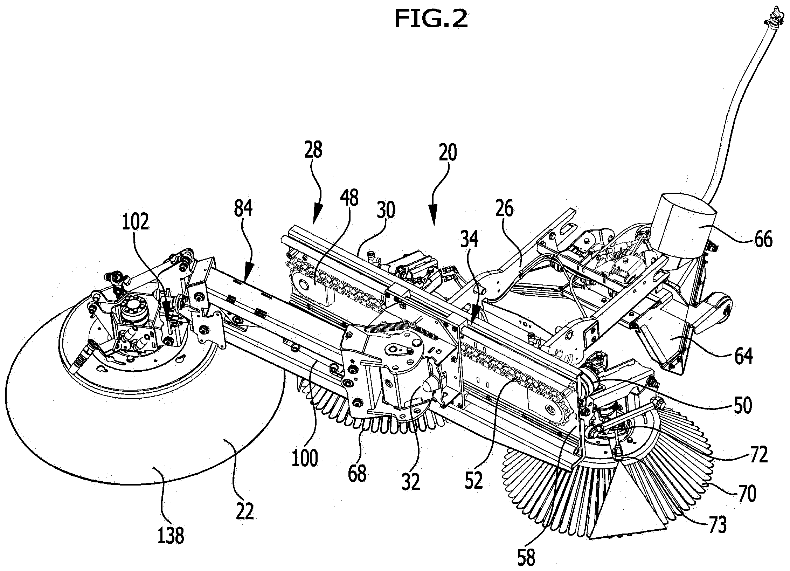

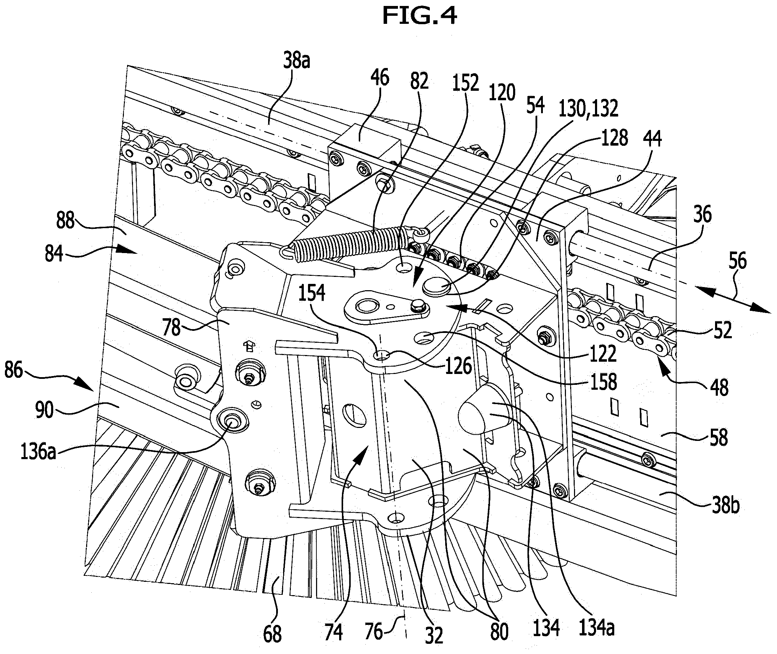

Die Geräteträgervorrichtung 20 umfasst einen Rahmen 26 (Figur 2). An dem Rahmen 26 ist eine Lineareinheit 28 gehalten. Die Lineareinheit 28 umfasst dabei einen Halter 30, welcher einen Schlitten 32 hält. Der Halter 30 umfasst eine Führungseinrichtung 34 für eine Linearführung des Schlittens 32 an dem Halter 30 mit einer Verschiebungsachse 36 (vergleiche Figur 4).

Bei einem Ausführungsbeispiel umfasst die Führungseinrichtung 34 beabstandete Stangen 38a, 38b und insbesondere Rundstangen, welche parallel zueinander ausgerichtet sind und längs der Verschiebungsachse 36 orientiert sind.

Der Vorderwagen 12 hat eine Radachse 40 als Drehachse für Vorderräder 42. Die Vorwärts-Fahrtrichtung 24 ist senkrecht zu dieser Radachse 40 orientiert. Die Verschiebungsachse 36 liegt parallel zu dieser Radachse 40. Entsprechend sind die Stangen 38a, 38b parallel zu der Radachse 40 ausgerichtet.

Der Schlitten 32 weist ein Führungsteil 44 auf (Figur 4), welches über entsprechende Führungselemente 46 auf die Stangen 38a, 38b aufgesetzt ist.

Bei dem gezeigten Ausführungsbeispiel (Figur 4) sind jeder Stange 38a, 38b jeweils zwei beabstandete Führungselemente 46 zugeordnet, über die der Schlitten 32 an der Führungseinrichtung 34 des Halters 30 gehalten ist.

Für einen Verschiebungsantrieb und zur Festlegung einer Verschiebungsposition des Schlittens 32 in der Verschiebungsachse 36 an dem Halter 30 ist bei einer Ausführungsform ein Kettenantrieb 48 vorgesehen. Der Kettenantrieb 48 weist einen Antriebsmotor 50 auf, welcher insbesondere an dem Halter 30 sitzt.

Bei einem Ausführungsbeispiel sitzt der Antriebsmotor 50 an dem Halter 30 an einer Seite, welcher derjenigen Seite abgewandt ist, an welcher die Stangen 38a, 38b positioniert sind.

Der Kettenantrieb 48 weist ferner eine Kette 52 mit einer Mehrzahl von Kettengliedern auf, welche an dem Schlitten 32 an einem Angriffsbereich 54 angreift.

Durch den Antriebsmotor 50 wird eine Umlaufbewegung der Kette 52 angetrieben. Durch Kopplung der Kette 52 an den Angriffsbereich 54 des Schlittens 32 wird der Schlitten in Abhängigkeit von der Umlaufrichtung längs der Verschiebungsachse 36 in der entsprechenden Richtung bzw. Gegenrichtung 56 linear verschoben. Eine bestimmte Position der Kette 52 (nach Abschalten des Antriebsmotors 50) legt dabei die Verschiebungsstellung des Schlittens 32 längs der Verschiebungsachse 36 fest.

Der Halter 30 umfasst ein plattenförmiges Element 58, an welchem die Stangen 38a, 38b sitzen. Dieses plattenförmige Element 58 ist, wenn die Geräteträgervorrichtung 20 an dem Fahrzeug 12 positioniert ist, an der Vorderfront 18 oder vor dieser positioniert. Sie ist insbesondere mindestens näherungsweise parallel zu der Vorderfront 18 ausgerichtet. Sie ist dabei beabstandet zu einem Untergrund, auf welchem das Fahrzeug 10 aufsteht.

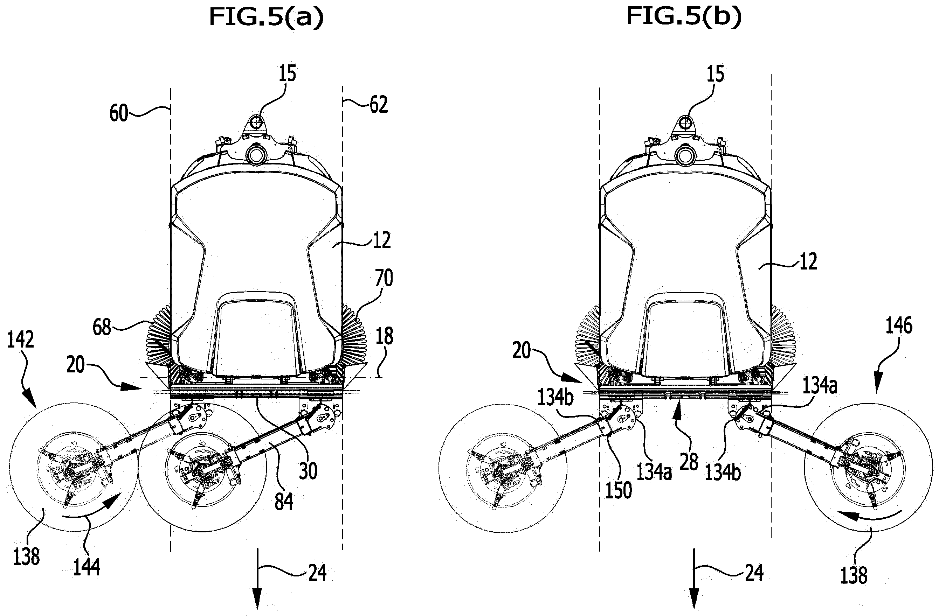

Es ist insbesondere vorgesehen, dass der Halter 30 mit dem plattenförmigen Element 58 eine Länge hat, die im Wesentlichen einer Fahrzeugbreite zwischen einer rechten Begrenzungsebene 60 und einer linken Begrenzungsebene 62 (vergleiche Figur 5(a)) entspricht, oder kleiner als diese Breite ist. Es ist insbesondere nicht vorgesehen, dass die Lineareinheit 28 mit ihrem Halter 30 und dem plattenförmigen Element 58 über die Begrenzungsebenen 60, 62 nach links und/oder rechts hinausragt.

Bei einem Ausführungsbeispiel ist an dem Rahmen 26 beabstandet zu dem Halter 30 ein Saugmund 64 (Figur 2) angeordnet. Wenn die Geräteträgervorrichtung 20 an dem Fahrzeug 10 montiert ist, ist der Saugmund 64 insbesondere unterhalb des Vorderwagens 12 positioniert.

Mit dem Saugmund 64 ist fluidwirksam ein Anschluss 66 verbunden. An diesen lässt sich ein Saugschlauch anschließen, wobei für einen Saugbetrieb insbesondere ein entsprechendes Saugaggregat an dem Hinterwagen 14 des Fahrzeugs 12 positioniert ist.

An dem Rahmen 26 sitzen ferner ein erster Seitenbesen 68 und ein zweiter Seitenbesen 70. Die Seitenbesen 68, 70 sind insbesondere als Tellerbesen ausgebildet. Ihnen ist insbesondere jeweils ein (Rotations-)Antrieb 72 für eine rotative Bewegung zugeordnet.

Der erste Seitenbesen 68 und der zweite Seitenbesen 70 sind so positioniert, dass Kehrgut dem Saugmund 64 zugeführt wird.

Bei an dem Fahrzeug 10 positionierter Geräteträgervorrichtung 20 sind der erste Seitenbesen 68 und der zweite Seitenbesen 70 mindestens teilweise unterhalb des Vorderwagens 12 positioniert (vergleiche Figur 5(a)).

Es kann dabei vorgesehen sein, dass ein Teilbereich des ersten Seitenbesens 68 über die rechte Begrenzungsseite 60 hinausragt und entsprechend ein Teilbereich des zweiten Seitenbesens 70 über die linke Begrenzungsseite 62 hinausragt.

Es ist auch möglich, dass ein Teilbereich des ersten Seitenbesens 68 bzw. des zweiten Seitenbesens 70 über die Vorderfront 18 hinausragt.

Dem ersten Seitenbesen 68 und/oder dem zweiten Seitenbesen 70 ist eine Sprüheinrichtung 73 zugeordnet, über welche sich beispielsweise Wasser auf eine zu reinigende Bodenfläche sprühen lässt.

An dem Schlitten 32 sitzt ein Schlittengelenk 74 mit einer Schlitten-Schwenkachse 76 (vergleiche Figur 4). Die Schlitten-Schwenkachse 76 ist quer und insbesondere senkrecht zu der Verschiebungsachse 36 für die Verschiebungsführung des Schlittens 32 in dem Halter 30 orientiert.

Das Schlittengelenk 74 umfasst ein erstes Gelenkteil 78, welches um die Schlitten-Schwenkachse 76 schwenkbar relativ zu dem Schlitten 32 beweglich ist. Das Schlittengelenk 74 umfasst ferner ein zweites Gelenkteil 80, welches schwenkfest mit dem Schlitten 32 verbunden ist bzw. Teil des Schlittens 32 ist; das erste Gelenkteil 78 ist an dem zweiten Gelenkteil 80 gelagert.

Zwischen dem Schlitten 32 und dem ersten Gelenkteil 78 ist als Beispiel einer Kopplungseinrichtung eine Federeinrichtung 82 angeordnet. Die Federeinrichtung 82 ist an einem Ende an dem Schlitten 32 angelenkt und an dem gegenüberliegenden anderen Ende an dem ersten Gelenkteil 78 angelenkt.

Die Kopplungseinrichtung ist so ausgebildet, dass, wenn das Schlittengelenk 74 nicht festgelegt ist (eine Schwenkbarkeit des ersten Gelenkteils 78 zu dem zweiten Gelenkteil 80 nicht durch Formschluss gesperrt ist), eine freie Verschwenkbarkeit des ersten Gelenkteils 78 zu dem zweiten Gelenkteil 80 zumindest erschwert ist.

Wenn keine Fixierung bezüglich der Schlitten-Schwenkachse 76 vorliegt, dann kann die Federeinrichtung 82 verhindern, dass beispielsweise beim Bremsen des Fahrzeugs 10 eine Schwenkbewegung auf eine andere Seite erfolgt.

An dem Schlitten 32 sitzt eine Auslegereinrichtung 84, welche über das Schlittengelenk 74 um die erste Schlitten-Schwenkachse 76 schwenkbar ist.

Die Auslegereinrichtung 84 ist an dem ersten Gelenkteil 78 gehalten und dadurch um die Schlitten-Schwenkachse 76 schwenkbar.

Bei einem Ausführungsbeispiel umfasst die Auslegereinrichtung 84 als Ausleger einen Parallelogramm-Lenker 86 mit einer ersten Stange 88 und einer zweiten Stange 90. Die erste Stange 88 und die zweite Stange 90 sind jeweils schwenkbar an das erste Gelenkteil 78 angelenkt mit parallelen, beabstandeten Schwenkachsen 92a, 92b.

Die Schwenkachsen 92a, 92b sind quer zu der Schlitten-Schwenkachse 76 orientiert. Ihre Lage im Raum hängt ab von der Position des ersten Gelenkteils 78 an dem Schlittengelenk 74.

Anlenkstellen der ersten Stange 88 und der zweiten Stange 90 an dem ersten Gelenkteil 78 sind beabstandet zueinander (in einer Richtung parallel zur Schlitten-Schwenkachse 76) und liegen übereinander.

Die erste Stange 88 und die zweite Stange 90 sind ferner über eine Brücke 94 miteinander verbunden, wobei die Brücke beabstandet zu dem ersten Gelenkteil 78 ist. An einem Ende sind die erste Stange 88 und die zweite Stange 90 an das erste Gelenkteil 78 angelenkt, und an einem jeweiligen gegenüberliegenden Ende sind sie an die Brücke 94 angelenkt. Anlenkstellen an die Brücke 94 sind dabei derart, dass die erste Stange 88 und die zweite Stange 90 immer parallel orientiert sind. Ein Abstand zwischen Anlenkstellen der ersten Stange 88 und der zweiten Stange 90 an der Brücke 94 ist gleich wie ein Abstand der entsprechenden Anlenkstellen an dem ersten Gelenkteil 78. Dadurch sind an der Brücke 94 Schwenkachsen 96a, 96b vorgegeben, welche parallel zueinander beabstandet sind und auch parallel beabstandet zu den Schwenkachsen 92a, 92b sind.

Durch den Parallelogramm-Lenker 86 lässt sich eine Höhenposition (Neigungsposition) eines Werkzeughalters 98, welcher an dem Parallelogramm-Lenker 86 und dabei an der Brücke 94 gehalten ist, relativ zu der Lineareinheit 28 und dadurch relativ auch zu einem Bearbeitungsboden einstellen.

Zur Einstellung und auch Festlegung einer entsprechenden Schwenkposition des Parallelogramm-Lenkers 86 zu dem Schlittengelenk 74 (und damit auch zu dem Schlitten 32) ist ein Zylinder 100 insbesondere in Form eines Pneumatikzylinders oder Hydraulikzylinders vorgesehen.

Bei einer Ausführungsform ist es vorgesehen, dass der Werkzeughalter 98 mit dem Auslenker (dem Parallelogramm-Lenker 86) der Auslegereinrichtung 84 über eine Gelenkeinrichtung 102 verbunden ist. Die Gelenkeinrichtung 102 umfasst insbesondere ein erstes Gelenk 104 mit einer Nickachse 106. Dem ersten Gelenk 104 ist eine entsprechende Einstelleinrichtung 108 (und Feststelleinrichtung) insbesondere in Form eines Pneumatikzylinders oder Hydraulikzylinders zugeordnet.

Ferner umfasst die Gelenkeinrichtung 102 ein zweites Gelenk 110, welches eine Rollachse 112 (Wankachse) definiert. Die Rollachse 112 ist insbesondere quer und vorzugsweise senkrecht zu der Nickachse 106 orientiert.

Dem zweiten Gelenk ist eine Einstelleinrichtung 114 (und Feststelleinrichtung) zugeordnet, welche insbesondere ein Hydraulikzylinder oder Pneumatikzylinder ist.

Durch die Gelenkeinrichtung 102 lässt sich eine Schwenkposition um zwei Achsen (die Nickachse 106 und die Rollachse 112) des Werkzeughalters 98 zu der Brücke 94 und damit zu dem Parallelogramm-Lenker 86 und damit wiederum zu dem Schlitten 32 bzw. dem Halter 30 und damit wiederum relativ zu dem Fahrzeug 10 einstellen.

Es kann so insbesondere eine Werkzeugausrichtung um diese beiden Achsen 106, 112 zu einem zu bearbeitenden Boden eingestellt werden.

An dem Werkzeughalter 98 ist ein Antrieb 116 angeordnet. Dieser ist insbesondere als Rotationsantrieb zur Rotation eines an dem Werkzeughalter 98 gehaltenen Werkzeugs 22 um eine Rotationsachse 118 ausgebildet.

Eine Orientierung der Rotationsachse 118 zu einem zu bearbeitenden Boden lässt sich durch die Gelenkeinrichtung 102 vorgeben.

Es ist insbesondere vorgesehen, dass ein Bediener des Fahrzeugs 10 (welcher in der Fahrerkabine 16 sitzt) von der Fahrerkabine 16 aus die Position des Schlittens 32 an dem Halter 30 längs der Verschiebungsachse 36 einstellen kann.

Ferner ist es vorgesehen, dass er die Position des Parallelogramm-Lenkers 86 von der Fahrerkabine 16 aus einstellen kann, das heißt insbesondere die Höhenposition eines Werkzeugs 22, welches an dem Werkzeughalter 98 gehalten ist, einstellen kann. Er kann dann insbesondere das Werkzeug 22 auf eine Bearbeitungsfläche aufsetzen bzw. das Werkzeug 22 beispielsweise für eine nachfolgende Transportfahrt abheben.

Ferner ist es vorgesehen, dass der Bediener von der Fahrerkabine 16 aus die Position des Werkzeughalters 98 (und damit das Werkzeug 22) bezüglich der Nickachse 106 und der Rollachse 112 einstellen kann.

Es ist ferner vorteilhafterweise vorgesehen, dass ein Bediener von der Fahrerkabine 16 aus einen Betrieb der Antriebe 72 der jeweiligen Seitenbesen 68, 70 einschalten bzw. ausschalten kann. Ferner ist es vorgesehen, dass ein Rotationsbetrieb des Antriebs 116 an dem Werkzeughalter 98 von einem Bediener in der Fahrerkabine 16 schaltbar ist. Weiterhin ist es günstigerweise vorgesehen, dass ein Bediener von der Fahrerkabine 16 aus eine Rotationsrichtung am Antrieb 116 (für eine Drehung des Werkzeugs 22 um die Rotationachse 118) einstellen kann.

Für einen Betrieb des Fahrzeugs 10 und insbesondere Bodenbearbeitungsbetrieb (wie Reinigungsbetrieb) des Fahrzeugs 10 mit dem Werkzeug 22 an der Geräteträgervorrichtung 20 ist die Schwenkposition der Auslegereinrichtung 84 (und damit des Werkzeughalters 98 mit dem Werkzeug 22) bezüglich der Schlitten-Schwenkachse 76 festgelegt. Es ist dazu eine Festlegungseinrichtung 120 vorgesehen. Die Festlegungseinrichtung 120 umfasst eine Formschlusseinrichtung 122, durch welche eine Formschlussverbindung mit dem Schlitten 32 herstellbar ist. Sie umfasst ferner eine Antriebseinrichtung 124 mit dem Antrieb 116, durch welchen ebenfalls eine oder mehrere Schwenkpositionen festlegbar sind, wie unten noch näher erläutert wird.

Bei einem Ausführungsbeispiel umfasst die Formschlusseinrichtung 122 eine Mehrzahl von Öffnungen 126, welche beabstandet zueinander sind. Die Öffnungen 126 sind bei einer Ausführungsform an dem ersten Gelenkteil 78 angeordnet.

An dem Schlitten 32 ist eine Gegenöffnung 128 angeordnet. Die Öffnung 126 und die Gegenöffnung 128 sind parallel zur Schlitten-Schwenkachse 76 ausgerichtet.

Sie lassen sich fluchtend zueinander ausrichten.

Es ist ein Stiftelement 130 insbesondere in Form eines Absteckbolzens 132 vorgesehen. Wenn ein Stiftelement 130 in eine Öffnung 126 und in die GegenÖffnung 128 eingetaucht ist, dann ist durch dieses Öffnungs-Gegenöffnungs-Paar eine Schwenkbeweglichkeit der Auslegereinrichtung 84 um die Schlitten-Schwenkachse 76 formschlüssig gesperrt (vergleiche Figur 4).

Die Auswahl der entsprechenden Öffnung aus den Öffnungen 126 bestimmt dabei, welche Schwenkposition der Auslegereinrichtung 84 um die Schlitten-Schwenkachse 76 festgelegt ist.

Durch die Formschlusseinrichtung 122 lässt sich über Formschluss das erste Gelenkteil 78 mechanisch mit dem zweiten Gelenkteil 80 festlegen, um die Schwenkbarkeit um die Schlitten-Schwenkachse 76 zu sperren.

In der Regel muss diese Festlegung durch einen Bediener manuell durch entsprechendes Einsetzen des Stiftelements 130 durchgeführt werden.

Wenn eine solche festgelegte Schwenkposition gelöst werden soll, muss das Stiftelement 130 aus der entsprechenden Öffnung und Gegenöffnung 126, 128 herausgenommen werden.

Die Anzahl und Position der Öffnungen 126 an dem ersten Gelenkteil 78 definiert dann die ausgezeichneten Schwenkstellungen, welche festlegbar sind.

Es ist grundsätzlich möglich, dass auch an dem Schlitten 32 eine Mehrzahl von Gegenöffnungen 128 vorhanden sind. In diesem Falle kann an dem ersten Gelenkteil 78 auch nur eine Öffnung 126 vorhanden sein.

Bei der gezeigten Ausführungsform, bei der eine Mehrzahl von Öffnungen 126 an dem ersten Gelenkteil 78 und nur eine Gegenöffnung 128 an dem Schlitten 32 angeordnet ist, ergibt sich ein kompakter, konstruktiv einfacher Aufbau.

Eine Festlegung der Schwenkbarkeit um die Schlitten-Schwenkachse 76 durch die Formschlusseinrichtung 122 erfolgt insbesondere dann, wenn ein Werkzeug 22 an der Geräteträgervorrichtung 20 eingesetzt wird, bei welcher relativ große Kräfte auf eine Bearbeitungsfläche ausgeübt werden und dadurch auch relativ große Gegenkräfte auf die Geräteträgervorrichtung 20 ausgeübt werden.

Dem Schlittengelenk 74 sind Pufferelemente 134 zugeordnet, welche einen maximalen Schwenkwinkel um die Schlitten-Schwenkachse 76 definieren, wobei insbesondere ein erstes Pufferelement 134a vorgesehen ist, welches einen maximalen Schwenkwinkel nach links (bezogen auf die Vorwärts-Fahrtrichtung 24) vorgibt, und es ist ein zweites Pufferelement 134b vorgesehen, welches einen maximalen Schwenkwinkel nach rechts vorgibt (vergleiche Figur 5(b)).

Ein Pufferelement 134 ist insbesondere elastisch ausgebildet und beispielsweise als Gummipuffer ausgebildet.

Bei einem Ausführungsbeispiel sitzen die Pufferelemente 134a, 134b jeweils an dem Schlitten 32. Das erste Gelenkteil 78 weist zugeordnete Anlagebereiche 136a, 136b auf. Bei Anlage des Anlagebereichs 136a an dem ersten Pufferelement 134a ist der maximale Schwenkwinkel nach links erreicht. Bei Anlage des Anlagebereichs 136b an dem ersten Gelenkteil 78 an dem zweiten Pufferelement 134b ist der maximale Schwenkwinkel nach rechts erreicht.

Der Geräteträgervorrichtung 20 ist ein Satz von unterschiedlichen Werkzeugen 22 zugeordnet, wobei dieser Satz von Werkzeugen mindestens ein erstes Werkzeug 138 und ein zweites Werkzeug 140 umfasst. Das erste Werkzeug 138 und das zweite Werkzeug 140 sind unterschiedlich ausgebildet. Insbesondere üben sie bei einem Bearbeitungsvorgang stark unterschiedliche Kräfte aus, sodass die Gegenkräfte, welche auf die Geräteträgervorrichtung 20 bei unterschiedlichen Werkzeugen 138, 140 ausgeübt werden, stark unterschiedlich sind.

Das erste Werkzeug 138 und das zweite Werkzeug 140 ist insbesondere jeweils ein Reinigungswerkzeug und insbesondere Kehrwerkzeug.

Bei einem Ausführungsbeispiel sind das erste Werkzeug 138 und das zweite Werkzeug 140 jeweils Borstenwerkzeuge bzw. Bürstenwerkzeuge, welche sich durch die Borstenhärte unterscheiden.

Bei einer Ausführungsform sind das erste Werkzeug 138 und das zweite Werkzeug 140 jeweils Tellerbürstenwerkzeuge.

Beispielsweise ist das Werkzeug 138 ein konventioneller Kehrbesen zum Kehren von relativ glatten Flächen. Das zweite Werkzeug 140 ist beispielsweise ein Wildkrautbesen, mit dem sich Wildkraut entfernen lässt. Ein solcher Wildkrautbesen weist im Vergleich zu einem konventionellen Kehrbesen sehr viel härtere Borsten auf. Es wird bei einem Bearbeitungsvorgang eine relativ große Kraft auf den Bearbeitungsbereich ausgeübt und die resultierenden Gegenkräfte auf die Geräteträgervorrichtung 20 sind entsprechend groß.

Im Zusammenhang mit der Verwendung eines ersten Werkzeugs 138, bei dem relativ kleine Kräfte ausgeübt werden, ist es vorgesehen, dass für eine maximale Schwenkstellung nach rechts (bezogen auf die Vorwärts-Fahrtrichtung 3), der Schlitten 32 in eine entsprechende Position gefahren wird und insbesondere in einer Verschiebungsachse 36 maximal nach rechts gefahren wird (Figur 5(a)).

Das entsprechende erste Werkzeug 138 wird auf den zu reinigenden Boden aufgesetzt. Über die Gelenkeinrichtung 102 wird die entsprechende Verschwenkung eingestellt.

Das erste Werkzeug 138 wird in einer solchen Rotationsrichtung betrieben, dass aufgrund der Rotation (und Abstützung) des ersten Werkzeugs 138 an einem Boden das erste Gelenkteil 78 gegen den zugeordneten Puffer 134b gedrückt wird.

Diese Stellung ist in Figur 5(a) mit dem Bezugszeichen 142 angedeutet. Es handelt sich um eine erste maximale Schwenkstellung nach rechts. Die erste Rotationsrichtung ist in Figur 5(a) mit dem Bezugszeichen 144 angedeutet. Aufgrund der Rotation in der Rotationsrichtung 144 wird die erste maximale Schwenkstellung 142 festgelegt. Die Antriebseinrichtung 124 mit ihrem Antrieb 116 legt die erste maximale Schwenkstellung 142 fest. Diese Festlegung ist formschlussfrei.

Zur Einstellung einer zweiten maximalen Schwenkstellung 146 (Figur 5(b)) wird ausgehend von der ersten maximalen Schwenkstellung 142 das erste Werkzeug 138 über die Auslegereinrichtung 84 angehoben. Der Schlitten 32 fährt längs der Verschiebungsachse 36 nach links und insbesondere so weit nach links, bis ein Anschlag an dem Halter 30 erreicht ist. Das erste Werkzeug 138 wird dann wieder auf dem Boden abgesetzt.

Um die zweite maximale Schwenkstellung 146 festzulegen, wird über den Antrieb 116 das erste Werkzeug 138 in einer zweiten Rotationsrichtung 148 rotiert. Die zweite Rotationsrichtung 148 ist entgegengesetzt zu der ersten Rotationsrichtung 144.

Aufgrund der Rotation des ersten Werkzeugs 138 mit Bodenbeaufschlagung wird dabei das erste Gelenkteil 78 mit seinem Anlagebereich 136a an das erste Pufferelement 134a gedrückt. Es wird dadurch die zweite maximale Schwenkstellung 146 festgelegt.

Diese zweite maximale Schwenkstellung 146 wird nicht durch Formschluss oder dergleichen festgelegt.

Die Rotation des ersten Werkzeugs 138 über die Antriebseinrichtung 124 und dabei über den Antrieb 116 bewirkt je nach Rotationsrichtung ein Festlegen der ersten maximalen Schwenkstellung 142 bzw. der zweiten maximalen Schwenkstellung 146.

Grundsätzlich ist es auch möglich, dass die Antriebseinrichtung 124 einen Antrieb 150 umfasst, welcher eine Einstellung einer Schwenkposition der Auslegereinrichtung 84 bezogen auf die Schlitten-Schwenkachse 76 bewirkt. Der Antrieb 150 kann dabei direkt dem Schlittengelenk 74 zugeordnet sein oder zwischen dem Schlitten 32 und der Auslegereinrichtung 84 wirken.

Er bewirkt insbesondere eine Festlegung für eine eingestellte Schwenkposition.

Im Betrieb wirken Gegenkräfte auf diesen Antrieb 150, der entsprechend die Kräfte aufnehmen muss.

Die Einstellung und Festlegung einer Schwenkstellung der Auslegereinrichtung 84 an der Schlitten-Schwenkachse 76 über die Antriebseinrichtung 124 (über den Antrieb 116 bezüglich der ersten Rotationsrichtung 144 und der zweiten Rotationsrichtung 148) oder über den Antrieb 150 ist dann geeignet, wenn keine zu großen Gegenkräfte auf die Geräteträgervorrichtung 20 wirken, da insbesondere diese Gegenkräfte dann auch auf die Antriebseinrichtung 124 wirken.

Bei einer sehr großen Kraftbeaufschlagung wie beispielsweise einem Wildkrautbesen als zweitem Werkzeug 140 ist diese Festlegung nicht mehr geeignet, da sie unter anderem zu Beschädigungen an der Antriebseinrichtung 124 führen kann bzw. keine ausreichende Festlegungskraft vorhanden ist.

Bei Verwendung des zweiten Werkzeugs 140 erfolgt eine Festlegung über die Formschlusseinrichtung 122 und dabei über den Absteckbolzen 132, welcher durch die gewünschte Öffnung 126 und Gegenöffnung 128 durchgesteckt ist.

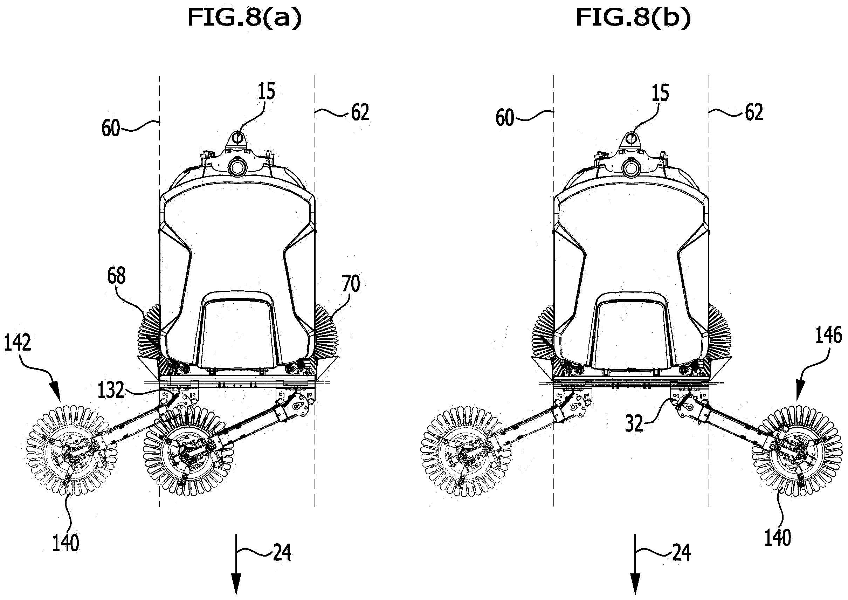

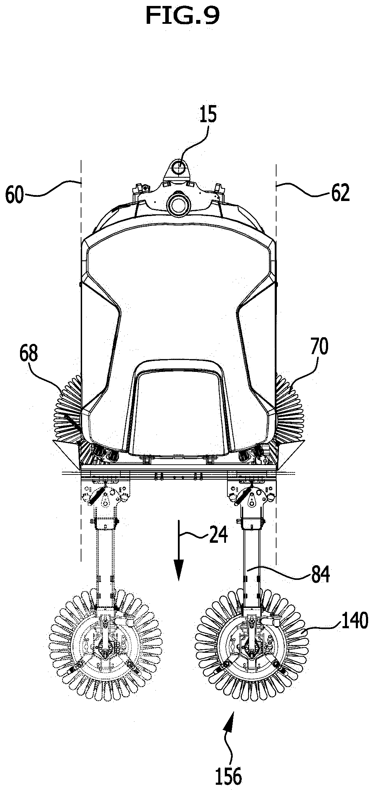

Dies ist in den Figuren 8(a), (b) und 9 angedeutet.

Für eine maximale Schwenkposition nach links (Figur 8(a)) ist der entsprechende Absteckbolzen 132 durch eine entsprechende Öffnung 152 (Figur 4) an dem ersten Gelenkteil 78 und der Gegenöffnung 128 durchgesteckt. Es ist ein Formschluss erreicht und die entsprechende erste maximale Schwenkstellung 142 ist durch Formschluss gesichert. Die Formschlussverbindung kann dabei die großen wirkenden Gegenkräfte aufnehmen.

Zur Einstellung der zweiten maximalen Schwenkstellung 146 wird (nach angehobenem erstem Werkzeug 140) der Schlitten 32 nach links verfahren.

Ein Bediener führt insbesondere manuell den Absteckbolzen 132 aus den Öffnungen 152, 128 heraus, schwenkt insbesondere manuell die Auslegereinrichtung 84, bis eine Öffnung 154 (Figur 4) an dem ersten Gelenkteil 78 fluchtend mit der Gegenöffnung 128 ausgerichtet ist, und steckt dann den Absteckbolzen 132 auf.

Es ist dadurch eine Formschlussfestlegung der zweiten maximalen Schwenkstellung 146 erreicht.

Bei der Formschlussverbindung zur Herstellung der ersten maximalen Schwenkstellung 142 und der zweiten maximalen Schwenkstellung 146 ist insbesondere eine Schwenkbarkeit in beiden Richtungen gesperrt. (Bei einer Festlegung über die Antriebseinrichtung 124 ist "hardwaremäßig" eine Schwenkbarkeit in einer Richtung durch Anlage des ersten Gelenkteils 78 an dem jeweiligen Pufferelement 134 gesperrt; bei dem Antrieb 150 ist bei entsprechend ausgebildeter Hemmung des Antriebs 150 die Schwenkbarkeit auch in die Gegenrichtung gesperrt. Bei dem Antrieb 116 ist die Schwenkbarkeit "softwaremäßig" über die Rotation des ersten Werkzeugs 138 gesperrt.)

Über Festlegung mit der Formschlusseinrichtung 122 sind auch andere Positionen möglich, wie beispielsweise eine Position, bei der die Auslegereinrichtung 84 mindestens näherungsweise senkrecht zu dem Halter 30 orientiert ist (Figur 9).

Insbesondere ist eine Frontposition 156 für das entsprechende zweite Werkzeug 140 über die Formschlusseinrichtung 122 festlegbar. In dieser Frontposition 156 ist das zweite Werkzeug 140 vor der Vorderfront 18 positioniert.

Die Frontposition 156 liegt insbesondere zwischen der ersten maximalen Schwenkstellung 142 und der zweiten maximalen Schwenkstellung 146.

Die Frontposition 156 ist durch eine oder mehrere Öffnungen 158 vorgegeben, welche an dem ersten Gelenkteil 78 zwischen der äußeren Öffnung 152 und der anderen äußeren Öffnung 154 liegen.

Je mehr Öffnungen 126 vorhanden sind, umso mehr Schwenkposition bezüglich der Schlitten-Schwenkachse 76 lassen sich über eine Formschlussverbindung festlegen.

Das erfindungsgemäße Fahrzeug 10 bzw. die erfindungsgemäße Geräteträgervorrichtung 20 funktioniert wie folgt:
Für einen Beaufschlagungsbetrieb und insbesondere Reinigungsbetrieb ist die Geräteträgervorrichtung 20 an dem Fahrzeug 10 montiert.

In einem Reinigungsbetrieb rotieren der erste Seitenbesen 68 und der zweite Seitenbesen 70 und zwar insbesondere gegenläufig. Kehrgut lässt sich dadurch dem Saugmund 40 zuführen und kann abgeführt werden.

Über die Auslegereinrichtung 84 lässt sich der entsprechende Bodenbereich mit einem dritten Werkzeug beaufschlagen.

Je nach verwendetem Werkzeug erfolgt die Festlegung einer gewünschten Schwenkposition der Auslegereinrichtung bezogen auf die Schlitten-Schwenkachse 76 mit der Formschlusseinrichtung 122 oder der Antriebseinrichtung 124.

Für eine Freifahrt des Fahrzeugs 10 ist die Auslegereinrichtung 84 angehoben, sodass das entsprechende Werkzeug 138 bzw. 140 den Boden nicht berührt.

Für einen Bearbeitungsvorgang wird die Auslegereinrichtung 84 abgesenkt, damit das entsprechende Werkzeug 138 bzw. 140 auf den Bearbeitungsbereich wirken kann.

Über die Gelenkeinrichtung 102 wird der gewünschte Nickwinkel bzw. Rollwinkel eingestellt.

Über die Lineareinheit 28 lässt sich eine Verschiebungsposition des Schlittens 32 einstellen, um einen Bearbeitungsvorgang an einem gewünschten Bearbeitungsbereich durchzuführen.

Insbesondere kann ein Reinigungsvorgang rechts über der rechten Begrenzungsebene 60 hinaus durchgeführt werden bzw. links von der linken Begrenzungsebene 62.

Bei dem ersten Werkzeug 138, bei dem relativ geringe Kräfte ausgeübt werden, können die erste maximale Schwenkstellung 142 und die zweite maximale Schwenkstellung 146 über die Antriebseinrichtung 124 eingestellt werden. Insbesondere wird über entsprechende Rotation in der ersten Rotationsrichtung 144 die erste maximale Schwenkstellung 142 festgelegt bzw. die zweite maximale Schwenkstellung 146 festgelegt.

Eine Position des Schlittens 32 an der Lineareinheit 28 wird je nach gewünschtem Arbeitsvorgang eingestellt.

Wenn das zweite Werkzeug 140 verwendet wird, bei dem relativ große Kräfte ausgeübt werden, dann legt ein Bediener die gewünschte Schwenkposition an der Schlitten-Schwenkachse 76 über die Formschlusseinrichtung 122 fest und insbesondere manuell fest. Bei abgehobener Auslegereinrichtung wird die Auslegereinrichtung 84 um die Schlitten-Schwenkachse 76 in die gewünschte Position gebracht, bis eine entsprechende gewünschte Öffnung 126 mit der Gegenöffnung 128 fluchtend ausgelegt ist. Es wird der Absteckbolzen 132 eingesteckt. Dadurch ist dann eine Formschlussverbindung erreicht.

Es kann dann für einen Betrieb die Auslegereinrichtung 84 abgesenkt werden, um eine Bearbeitung insbesondere eines Bodens mit dem zweiten Werkzeug 140 durchzuführen.

Erfindungsgemäß wird ein Fahrzeug 10 mit einer Geräteträgervorrichtung 20 bereitgestellt, wobei sich unterschiedliche Betriebsarten durchführen lassen. Es ergeben sich erweiterte Einsetzmöglichkeiten durch die Festlegungseinrichtung 120 mit den Alternativen Formschlusseinrichtung 122 und Antriebseinrichtung 124.

Insbesondere lässt sich über die Geräteträgervorrichtung 20 ein Drei-Werkzeug-System mit den Seitenbesen 68, 70 und dem Werkzeug 22 bereitstellen, wobei wiederum das Werkzeug 22 aus einem entsprechenden Werkzeugsatz gewählt werden kann.

### Bezugszeichenliste

- 10: Fahrzeug
- 12: Vorderwagen
- 14: Hinterwagen
- 15: Knicklenker
- 16: Fahrerkabine
- 18: Vorderfront
- 20: Geräteträgervorrichtung
- 22: Werkzeug
- 24: Vorwärts-Fahrtrichtung
- 26: Rahmen
- 28: Linearelement
- 30: Halter
- 32: Schlitten
- 34: Führungseinrichtung
- 36: Verschiebungsachse
- 38a: Stange
- 38b: Stange
- 40: Radachse
- 42: Vorderrad
- 44: Führungsteil
- 46: Führungselement
- 48: Kettenantrieb
- 50: Antriebsmotor
- 52: Kette
- 54: Angriffsbereich
- 56: Richtung/Gegenrichtung
- 58: Plattenförmiges Element
- 60: Rechte Begrenzungsebene
- 62: Linke Begrenzungsebene
- 64: Saugmund
- 66: Anschluss
- 68: Erster Seitenbesen
- 70: Zweiter Seitenbesen
- 72: Antrieb
- 73: Sprüheinrichtung
- 74: Schlittengelenk
- 76: Schlitten-Schwenkachse
- 78: Erstes Gelenkteil
- 80: Zweites Gelenkteil
- 82: Federeinrichtung (Kopplungseinrichtung)
- 84: Auslegereinrichtung
- 86: Parallelogramm-Lenker
- 88: Erste Stange
- 90: Zweite Stange
- 92a: Schwenkachse
- 92b: Schwenkachse
- 94: Brücke
- 96a: Schwenkachse
- 96b: Schwenkachse
- 98: Werkzeughalter
- 100: Zylinder
- 102: Gelenkeinrichtung
- 104: Erstes Gelenk
- 106: Nickachse
- 108: Einstelleinrichtung
- 110: Zweites Gelenk
- 112: Rollachse
- 114: Einstelleinrichtung
- 116: Antrieb
- 118: Rotationsachse
- 120: Festlegungseinrichtung
- 122: Formschlusseinrichtung
- 124: Antriebseinrichtung
- 126: Öffnung
- 128: Gegenöffnung
- 130: Stiftelement
- 132: Absteckbolzen
- 134: Pufferelement
- 134a: Erstes Pufferelement
- 134b: Zweites Pufferelement
- 136a: Erster Anlagebereiche
- 136b: Zweiter Anlagebereich
- 138: Erstes Werkzeug
- 140: Zweites Werkzeug
- 142: Erste maximale Schwenkstellung
- 144: Erste Rotationsrichtung
- 146: Zweite maximale Schwenkstellung
- 148: Zweite Rotationsrichtung
- 150: Antrieb
- 152: Öffnung
- 154: Öffnung
- 156: Frontposition
- 158: Öffnung

## Patentansprüche

1. Geräteträgervorrichtung für ein Fahrzeug (10), umfassend eine Lineareinheit (28) mit einem Halter (30) und einem Schlitten (32), wobei der Schlitten (32) an dem Halter (30) linear verfahrbar gehalten ist, eine Auslegereinrichtung (84) mit einem Werkzeughalter (98), wobei die Auslegereinrichtung (84) über ein Schlittengelenk (74) um eine Schlitten-Schwenkachse (76) schwenkbar an dem Schlitten (32) gehalten ist, und eine Festlegungseinrichtung (120) zur Festlegung einer Schwenkposition der Auslegereinrichtung (84) relativ zu dem Schlitten (32) bezüglich der Schlitten-Schwenkachse (76), **dadurch gekennzeichnet, dass** die Festlegungseinrichtung (120) eine Formschlusseinrichtung (122) zur Festlegung der Schwenkposition der Auslegereinrichtung (84) durch Formschluss mit dem Schlitten (32) aufweist, und dass die Festlegungseinrichtung (120) dazu eine Antriebseinrichtung (124) zur Einstellung der Auslegereinrichtung (84) relativ zu dem Schlitten (32) bezüglich der Schlitten-Schwenkachse (76) umfasst, wobei die Antriebseinrichtung (126) mindestens eines der Folgenden umfasst:
(i) einen Antrieb (116) für ein Werkzeug (22), welches an dem Werkzeughalter (94) gehalten ist;
(ii) einen Antrieb (150) zur Einstellung einer Schwenkposition der Auslegereinrichtung (84) bezüglich der Schlitten-Schwenkachse (76).

2. Geräteträgervorrichtung nach Anspruch 1, **dadurch gekennzeichnet, dass** die Schlitten-Schwenkachse (76) quer und insbesondere senkrecht zu einer Verschiebungsachse (36) des Schlittens (32) an der Lineareinheit (28) orientiert ist.

3. Geräteträgervorrichtung nach Anspruch 1 oder 2, **dadurch gekennzeichnet, dass** das Schlittengelenk (74) ein Gelenkteil (78) umfasst, welches zu dem Schlitten (32) beweglich ist, und dass durch die Formschlusseinrichtung (122) das bewegliche Gelenkteil (78) durch Formschluss an dem Schlitten (32) festlegbar ist.

4. Geräteträgervorrichtung nach Anspruch 3, **dadurch gekennzeichnet, dass** das bewegliche Gelenkteil (78) mindestens eine Öffnung (126) aufweist, und dass der Schlitten (32) mindestens eine Gegenöffnung (128) aufweist, wobei durch ein Stiftelement (130), welches in die mindestens eine Öffnung (126) und die mindestens eine Gegenöffnung (128) eingetaucht ist, ein Formschluss hergestellt ist, und insbesondere
**dadurch gekennzeichnet, dass** das Stiftelement als Absteckbolzen (132) ausgebildet ist, und/oder
**dadurch gekennzeichnet, dass** das bewegliche Gelenkteil (78) eine Mehrzahl von beabstandeten Öffnungen (126) aufweist und insbesondere mindestens drei Öffnungen (126) aufweist.

5. Geräteträgervorrichtung nach Anspruch 4, **dadurch gekennzeichnet, dass** eine Öffnungsrichtung mindestens näherungsweise parallel zu einer Schlitten-Schwenkachse (76) des Schlittengelenks (74) orientiert ist.

6. Geräteträgervorrichtung nach einem der Ansprüche 3 bis 5, **dadurch gekennzeichnet, dass** zwischen dem Schlitten (32) und dem beweglichen Gelenkteil (78) eine Kopplungseinrichtung (82) angeordnet ist.

7. Geräteträgervorrichtung nach einem der vorangehenden Ansprüche, **gekennzeichnet durch** mindestens ein Pufferelement (134), welches eine ausgezeichnete Schwenkstellung (142; 146) und insbesondere maximale Schwenkstellung der Auslegereinrichtung (84) bezüglich der Schlitten-Schwenkachse (76) vorgibt, und insbesondere
**dadurch gekennzeichnet, dass** das mindestens eine Pufferelement (134) an dem Schlitten (32) angeordnet ist und ein bewegliches Gelenkteil (78) des Schlittengelenks (74) an dem Pufferelement (134) anlegbar ist, und/oder dass das mindestens eine Pufferelement an dem beweglichen Gelenkteil (78) angeordnet ist und an dem Schlitten (32) anlegbar ist.

8. Geräteträgervorrichtung nach einem der vorangehenden Ansprüche, **dadurch gekennzeichnet, dass** an dem Werkzeughalter (94) ein Antrieb (116) für ein Werkzeug (22) angeordnet ist, und insbesondere
**dadurch gekennzeichnet, dass** über eine Rotationsrichtung (144; 148) eines Werkzeugs (22) eine Schwenkposition (142; 144) der Auslegereinrichtung (84) bezüglich der Schlitten-Schwenkachse (76) festlegbar ist und insbesondere auch einstellbar ist, und insbesondere
**dadurch gekennzeichnet, dass** über eine erste Rotationsrichtung (144) eine erste maximale Schwenkposition (142) bezüglich der Schlitten-Schwenkachse (76) festlegbar ist und über eine zweite Rotationsrichtung (148), welche der ersten Rotationsrichtung (144) entgegengerichtet ist, eine zweite maximale Schwenkposition (146) bezüglich der Schlitten-Schwenkachse (76) festlegbar ist.

9. Geräteträgervorrichtung nach einem der vorangehenden Ansprüche, **gekennzeichnet durch** einen Satz von Werkzeugen mit mindestens einem ersten Werkzeug (138) und einem zweiten Werkzeug (140), welche unterschiedlich sind, wobei bei einem Bearbeitungsvorgang mittels des ersten Werkzeugs (138) eine kleinere Kraft auf die Geräteträgervorrichtung ausgeübt ist als bei einer Bearbeitung mit dem zweiten Werkzeug (140), und wobei eine Festlegung einer Schwenkposition bezüglich der Schlitten-Schwenkachse (76) für das erste Werkzeug (138) mittels der Antriebseinrichtung (124) und für das zweite Werkzeug (140) mittels der Formschlusseinrichtung (122) erfolgt, insbesondere mit mindestens einem der Folgenden:
- der Werkzeugsatz umfasst Reinigungswerkzeuge;
- der Werkzeugsatz umfasst Borstenwerkzeuge mit unterschiedlicher Borstenhärte;
- das erste Werkzeug (138) ist ein Kehrbesen;
- das zweite Werkzeug (140) ist ein Wildkrautbesen.

10. Geräteträgervorrichtung nach einem der vorangehenden Ansprüche, **gekennzeichnet durch** mindestens einen Seitenbesen (68; 70) und insbesondere einen ersten Seitenbesen (68) und einen zweiten Seitenbesen (70), welche an einem Rahmen (26) angeordnet sind, an welchem die Lineareinheit (28) sitzt.

11. Geräteträgervorrichtung nach einem der vorangehenden Ansprüche, **gekennzeichnet durch** mindestens eines der Folgenden:
- die Auslegereinrichtung (84) ist um eine Neigungsachse (92a, 92b, 96, 96b) relativ zu dem Schlitten (32) schwenkbar, welche quer zu einer Schlitten-Schwenkachse (76) des Schlittengelenks (74) orientiert ist;
- die Auslegereinrichtung (84) umfasst einen Parallelogramm-Lenker (86).

12. Geräteträgervorrichtung nach einem der vorangehenden Ansprüche, **dadurch gekennzeichnet, dass** der Werkzeughalter (94) über eine Gelenkeinrichtung (102) mit mindestens einer Werkzeughalter-Schwenkachse (106; 112) schwenkbar an einem Ausleger (86) der Auslegereinrichtung (84) gehalten ist, insbesondere mit mindestens einem der Folgenden:
- die mindestens eine Werkzeughalter-Schwenkachse (106; 112) ist quer zu einer Schlitten-Schwenkachse (76) orientiert;
- die Gelenkeinrichtung (102) weist eine Rollachse (112) und/oder eine Nickachse (106) als Werkzeughalter-Schwenkachse auf.

13. Geräteträgervorrichtung nach einem der vorangehenden Ansprüche, **gekennzeichnet durch** eine Ausbildung als Front-Geräteträgervorrichtung.

14. Fahrzeug, an welchem eine Geräteträgervorrichtung (20) gemäß einem der vorangehenden Ansprüche angeordnet ist.

15. Fahrzeug nach Anspruch 14, **gekennzeichnet durch** mindestens eines der Folgenden:
- die Lineareinheit (28) ist an einer Vorderfront (18) des Fahrzeugs positioniert und ist insbesondere mit der Vorderfront (18) verbunden oder ist zu dieser beabstandet;
- es gibt mindestens folgende festlegbare Stellungen der Auslegereinrichtung (84) bezüglich des Schlittens (32):
eine erste maximale Schwenkstellung (142) nach rechts bezogen auf eine Vorwärts-Fahrtrichtung (24) des Fahrzeugs;
eine zweite maximale Schwenkstellung (144) nach links bezogen auf die Vorwärts-Fahrtrichtung (24);
eine Frontstellung (156), bei der die Auslegereinrichtung (84) zwischen der ersten maximalen Schwenkstellung (142) und der zweiten maximalen Schwenkstellung (146) positioniert ist, wobei insbesondere die Frontstellung (156) durch die Formschlusseinrichtung (122) festgelegt ist und/oder je nach Anwendungsfall und verwendetem Werkzeug (138; 140) die maximalen Schwenkstellungen (142, 146) durch die Formschlusseinrichtung (30) oder durch die Antriebseinrichtung (124) festgelegt sind.

## Claims

1. Equipment carrier apparatus for a vehicle (10), comprising a linear unit (28) with a holder (30) and a carriage (32), wherein the carriage (32) is held on the holder (30) so as to be linearly displaceable, comprising a cantilever device (84) with a tool holder (98), wherein the cantilever device (84) is held on the carriage (32) so as to be pivotable about a carriage pivot axis (76) by way of a carriage joint (74), and comprising a fixing device (120) for fixing a pivot position of the cantilever device (84) relative to the carriage (32) with respect to the carriage pivot axis (76), **characterized in that** the fixing device (120) has a positive-locking device (122) for fixing the pivot position of the cantilever device (84) by positive engagement with the carriage (32), and **in that** for this purpose the fixing device (120) comprises a drive device (124) for adjusting the cantilever device (84) relative to the carriage (32) with respect to the carriage pivot axis (76), wherein the drive device (126) comprises at least one of the following:
(i) a drive (116) for a tool (22) that is held on the tool holder (94);
(ii) a drive (150) for adjusting a pivot position of the cantilever device (84) with respect to the carriage pivot axis (76).

2. Equipment carrier apparatus in accordance with Claim 1, **characterized in that** the carriage pivot axis (76) is oriented transversely and, in particular, perpendicularly to a displacement axis (36) of the carriage (32) on the linear unit (28).

3. Equipment carrier apparatus in accordance with Claim 1 or 2, **characterized in that** the carriage joint (74) comprises a joint part (78) that is movable relative to the carriage (32), and **in that** the movable joint part (78) is fixable by positive engagement to the carriage (32) by means of the positive-locking device (122).

4. Equipment carrier apparatus in accordance with Claim 3, **characterized in that** the movable joint part (78) has at least one opening (126), and **in that** the carriage (32) has at least one counter-opening (128), wherein a positive engagement is established by a pin element (130) that is immersed in the at least one opening (126) and the at least one counter-opening (128), and in particular
**characterized in that** the pin element is configured as a fixing bolt (132), and/or
**characterized in that** the movable joint part (78) has a plurality of openings (126) spaced at distance from one another, and in particular has at least three openings (126).

5. Equipment carrier apparatus in accordance with Claim 4, **characterized in that** an opening direction is oriented at least approximately in parallel to a carriage pivot axis (76) of the carriage joint (74).

6. Equipment carrier apparatus in accordance with any one of Claims 3 to 5, **characterized in that** a coupling device (82) is arranged between the carriage (32) and the movable joint part (78).

7. Equipment carrier apparatus in accordance with any one of the preceding Claims, **characterized by** at least one buffer element (134), which predetermines a defined pivot position (142; 146) and, in particular, maximum pivot position of the cantilever device (84) with respect to the carriage pivot axis (76), and in particular
**characterized in that** the at least one buffer element (134) is arranged on the carriage (32) and a movable joint part (78) of the carriage joint (74) is able to abut against the buffer element (134), and/or **in that** the at least one buffer element is arranged on the movable joint part (78) and is able to abut against the carriage (32).

8. Equipment carrier apparatus in accordance with any one of the preceding Claims, **characterized in that** a drive (116) for a tool (22) is arranged on the tool holder (94), and in particular
**characterized in that** a pivot position (142; 144) of the cantilever device (84) with respect to the carriage pivot axis (76) is fixable and in particular also adjustable by way of a direction of rotation (144; 148) of a tool (22), and in particular
**characterized in that** a first maximum pivot position (142) with respect to the carriage pivot axis (76) is fixable by way of a first direction of rotation (144) and a second maximum pivot position (146) with respect to the carriage pivot axis (76) is fixable by way of a second direction of rotation (148) opposite to the first direction of rotation (144).

9. Equipment carrier apparatus in accordance with any one of the preceding Claims, **characterized by** a set of tools with at least one first tool (138) and one second tool (140), which are different, wherein during a processing operation by means of the first tool (138) a smaller force is exerted on the equipment carrier apparatus than during a process with the second tool (140), and wherein a fixing of a pivot position with respect to the carriage pivot axis (76) for the first tool (138) takes place by means of the drive device (124) and for the second tool (140) by means of the positive-locking device (122), in particular with at least one of the following:
- the tool set comprises cleaning tools;
- the tool set comprises bristle tools with different bristle hardnesses;
- the first tool (138) is a sweeping brush;
- the second tool (140) is a weed brush.

10. Equipment carrier apparatus in accordance with any one of the preceding Claims, **characterized by** at least one side brush (68; 70) and, in particular, a first side brush (68) and a second side brush (70) that are arranged on a frame (26) on which the linear unit (28) sits.

11. Equipment carrier apparatus in accordance with any one of the preceding Claims, **characterized by** at least one of the following:
- the cantilever device (84) is pivotable relative to the carriage (32) about an inclination axis (92a, 92b, 96, 96b) that is oriented transversely to a carriage pivot axis (76) of the carriage joint (74);
- the cantilever device (84) comprises a parallelogram control arm (86).

12. Equipment carrier apparatus in accordance with any one of the preceding Claims, **characterized in that** the tool holder (94) is held on a cantilever (86) of the cantilever device (84) so as to be pivotable by way of an articulation device (102) with at least one tool holder pivot axis (106; 112), in particular with at least one of the following:
- the at least one tool holder pivot axis (106; 112) is oriented transversely to a carriage pivot axis (76);
- the articulation device (102) has a roll axis (112) and/or a pitch axis (106) as a tool holder pivot axis.

13. Equipment carrier apparatus in accordance with any one of the preceding Claims, **characterized by** a configuration as a front end equipment carrier apparatus.

14. Vehicle on which an equipment carrier apparatus (20) in accordance with any one of the preceding Claims is arranged.

15. Vehicle in accordance with Claim 14, **characterized by** at least one of the following:
- the linear unit (28) is positioned on a front (18) of the vehicle and is, in particular, connected to the front (18) or is spaced at a distance therefrom;
- there are at least the following fixable positions of the cantilever device (84) with respect to the carriage (32):
a first maximum pivot position (142) to the right relative to a forwards direction of travel (24) of the vehicle;
a second maximum pivot position (144) to the left relative to a forwards direction of travel (24);
a front position (156) in which the cantilever device (84) is positioned between the first maximum pivot position (142) and the second maximum pivot position (146), wherein, in particular, the front position (156) is fixed by the positive-locking device (122) and/or depending on the use case and the tool (138; 140) used, the maximum pivot positions (142, 146) are fixed by the positive-locking device (30) or by the drive device (124).

## Revendications

1. Dispositif porte-équipement pour un véhicule (10), comprenant une unité linéaire (28) avec un support (30) et un chariot (32), dans lequel le chariot (32) est retenu au niveau du support (30) de manière à pouvoir être déplacé linéairement, un dispositif de bras (84) muni d'un porte-outil (98), dans lequel le dispositif de bras (84) est retenu au niveau du chariot (32) de manière à pouvoir pivoter autour d'un axe de pivotement de chariot (76) par l'intermédiaire d'une articulation de chariot (74), et un dispositif de définition (120) permettant de définir une position de pivotement du dispositif de bras (84) par rapport au chariot (32) et par rapport à l'axe de pivotement de chariot (76), **caractérisé en ce que** le dispositif de définition (120) présente un dispositif de verrouillage par complémentarité de forme (122) permettant de définir la position de pivotement du dispositif de bras (84) grâce à un verrouillage par complémentarité de forme avec le chariot (32), et **en ce que** le dispositif de définition (120) comprend un dispositif d'entraînement (124) permettant d'ajuster le dispositif de bras (84) par rapport au chariot (32) et par rapport à l'axe de pivotement de chariot (76), dans lequel le dispositif d'entraînement (126) comprend au moins un des éléments suivants :
(i) un entraînement (116) destiné à un outil (22) retenu sur le porte-outil (94) ;
(ii) un entraînement (150) permettant d'ajuster une position de pivotement du dispositif de bras (84) par rapport à l'axe de pivotement de chariot (76).

2. Dispositif porte-équipement selon la revendication 1, **caractérisé en ce que** l'axe de pivotement de chariot (76) est orienté au niveau de l'unité linéaire (28) de manière transversale et en particulier perpendiculaire par rapport à un axe de déplacement (36) du chariot (32).

3. Dispositif porte-équipement selon la revendication 1 ou 2, **caractérisé en ce que** l'articulation de chariot (74) comprend une partie d'articulation (78) qui est mobile par rapport au chariot (32), et **en ce que** la partie d'articulation (78) mobile peut être fixée au chariot (32) grâce au verrouillage par complémentarité de forme (122).

4. Dispositif porte-équipement selon la revendication 3, **caractérisé en ce que** la partie d'articulation (78) mobile présente au moins un orifice (126), et **en ce que** le chariot (32) présente au moins un contre-orifice (128), dans lequel un verrouillage par complémentarité de forme intervient grâce à un élément formant goupille (130) qui est plongé dans le au moins un orifice (126) et le au moins un contre-orifice (128), et en particulier
**caractérisé en ce que** l'élément formant goupille est réalisé sous la forme d'un boulon à enficher (132), et/ou
**caractérisé en ce que** la partie d'articulation (78) mobile présente une pluralité d'orifices (126) espacés et présente en particulier au moins trois orifices (126).

5. Dispositif porte-équipement selon la revendication 4, **caractérisé en ce qu'**une direction d'orifice est orientée de manière au moins approximativement parallèle à un axe de pivotement de chariot (76) de l'articulation de chariot (74).

6. Dispositif porte-équipement selon l'une quelconque des revendications 3 à 5, **caractérisé en ce qu'**un dispositif d'accouplement (82) est agencé entre le chariot (32) et la partie d'articulation (78) mobile.

7. Dispositif porte-équipement selon l'une quelconque des revendications précédentes, **caractérisé par** au moins un élément formant tampon (134) qui procure une excellente position de pivotement (142 ; 146) et en particulier une position de pivotement maximale du dispositif de bras (84) par rapport à l'axe de pivotement de chariot (76), et en particulier
**caractérisé en ce que** le au moins un élément formant tampon (134) est agencé au niveau du chariot (32) et une partie d'articulation (78) mobile de l'articulation de chariot (74) peut être placée au niveau de l'élément formant tampon (134), et/ou **en ce que** le au moins un élément formant tampon est agencé au niveau de la partie d'articulation (78) mobile et peut être placé au niveau du chariot (32).

8. Dispositif porte-équipement selon l'une quelconque des revendications précédentes, **caractérisé en ce qu'**un entraînement (116) destiné à un outil (22) est agencé au niveau du porte-outil (94), et en particulier
**caractérisé en ce qu'**une position de pivotement (142 ; 144) du dispositif de bras (84) par rapport à l'axe de pivotement de chariot (76) peut être définie et en particulier être également ajustée par l'intermédiaire d'une direction de rotation (144 ; 148) d'un outil (22), et en particulier
**caractérisé en ce qu'**une première position de pivotement maximale (142) par rapport à l'axe de pivotement de chariot (76) peut être définie par l'intermédiaire d'une première direction de rotation (144) et une seconde position de pivotement maximale (146) par rapport à l'axe de pivotement de chariot (76) peut être définie par l'intermédiaire d'une seconde direction de rotation (148) qui est opposée à la première direction de rotation (144).

9. Dispositif porte-équipement selon l'une quelconque des revendications précédentes, **caractérisé par** un jeu d'outils comprenant au moins un premier outil (138) et un deuxième outil (140), lesdits outils étant différents, dans lequel, lors d'une opération d'usinage au moyen du premier outil (138), une force plus faible est exercée sur le dispositif porte-équipement que lors d'un usinage avec le deuxième outil (140), et dans lequel la définition d'une position de pivotement par rapport à l'axe de pivotement de chariot (76) intervient pour le premier outil (138) au moyen du dispositif d'entraînement (124) et pour le deuxième outil (140) au moyen du dispositif de verrouillage par complémentarité de forme (122), en particulier comprenant au moins un des éléments suivants :
- le jeu d'outils comprend des outils de nettoyage ;
- le jeu d'outils comprend des outils formant brosse qui présentent différentes duretés de brosse ;
- le premier outil (138) est un balai-brosse ;
- le second outil (140) est un balai de désherbage.

10. Dispositif porte-équipement selon l'une quelconque des revendications précédentes, **caractérisé par** au moins un balai latéral (68 ; 70) et en particulier un premier balai latéral (68) et un deuxième balai latéral (70) qui sont agencés au niveau d'un cadre (26) sur lequel repose l'unité linéaire (28).

11. Dispositif porte-équipement selon l'une quelconque des revendications précédentes, **caractérisé par** au moins un des éléments suivants :
- le dispositif de bras (84) peut pivoter par rapport au chariot (32) autour d'un axe d'inclinaison (92a, 92b, 96, 96b) qui est orienté de manière transversale par rapport à un axe de pivotement de chariot (76) de l'articulation de chariot (74) ;
- le dispositif de bras (84) comprend un guidon à parallélogramme (86).

12. Dispositif porte-équipement selon l'une quelconque des revendications précédentes, **caractérisé en ce que** le porte-outil (94) est retenu pivotant au niveau d'un bras (86) du dispositif de bras (84) par l'intermédiaire d'un dispositif d'articulation (102) comprenant au moins un axe de pivotement de porte-outil (106 ; 112), en particulier comprenant au moins un des éléments suivants :
- le au moins un axe de pivotement de porte-outil (106 ; 112) est orienté de manière transversale par rapport à un axe de pivotement de chariot (76) ;
- le dispositif d'articulation (102) présente un axe de roulis (112) et/ou un axe de tangage (106) tenant lieu d'axe de pivotement de porte-outil.

13. Dispositif porte-équipement selon l'une quelconque des revendications précédentes, **caractérisé par** une réalisation sous forme de dispositif porte-équipement frontal.

14. Véhicule sur lequel est agencé un dispositif porte-équipement (20) selon l'une quelconque des revendications précédentes.

15. Véhicule selon la revendication 14, **caractérisé par** au moins un des éléments suivants :
- l'unité linéaire (28) est positionnée sur une face avant (18) du véhicule et est en particulier reliée à la face avant (18) ou est espacée par rapport à celle-ci ;
- les positions pouvant être définies du dispositif de bras (84) par rapport au chariot (32) sont au moins celles ci-dessous :
une première position de pivotement maximale (142) vers la droite par rapport à une direction de marche avant (24) du véhicule ;
une deuxième position de pivotement maximale (144) vers la gauche par rapport à la direction de marche avant (24) ;
une position avant (156) dans laquelle le dispositif de bras (84) est positionné entre la première position de pivotement maximale (142) et la deuxième position de pivotement maximale (146), dans lequel la position avant (156) est en particulier définie grâce au dispositif de verrouillage par complémentarité de forme (122) et/ou les positions de pivotement maximales (142, 146) sont définies en fonction du domaine d'application et de l'outil (138 ; 140) utilisé grâce au dispositif de verrouillage par complémentarité de forme (30) ou grâce au dispositif d'entraînement (124).
